# EUROPEAN PATENT APPLICATION

(11) **EP 0 788 918 A2**
(43) Date of publication of application: **13.08.1997**
(21) Application number: 97100338.9
(22) Date of filing: 10.01.1997
(51) Int. Cl.: B60K 25/02

(54) **Engine power system with controlled power transfer**

(30) Priority: 12.02.1996 US 600195
(71) Applicant: ECHLIN INC., Branford, CT 06405 (US)
(72) Inventor: Meister, Jack B., Convent Station, New Jersey 07961 (US)
(74) Representative: Wehnert, Werner, Dipl.-Ing. Patentanwälte Hauck, Graalfs, Wehnert, Döring, Siemons

(57) **Abstract**

An engine power system (10, 30, 34) that includes an internal combustion engine (12), a plurality of power components (16, 18, 20, 38) each having a rotary input, a drive shaft (22) interconnecting the rotary inputs of the several components, and facility (24, 32, 40-44) for controlling power transfer so as to maintain adequate power at engine idle and low speed, but limit power transfer at high speed. In one preferred embodiment (10), a controlled speed governor (24) couples the engine output shaft (14) to the component drive shaft (22). The controlled speed governor comprises a constant speed governor, such that the speed of rotation of all of the rotary inputs and the drive shaft remains constant independent of fluctuations in engine rpm and angular velocity of the engine output shaft. In another embodiment (34) the power components include a dual-rotor alternator (38), in which one rotor segment (40) is selectively disconnected by a speed-sensitive switch (44).

## Description

The present invention is directed to engine power systems of the type that include an internal combustion engine that provides rotary input to one or more power components, and more particularly to a system of the described character in which the power components are interconnected by a shaft.

### Background and Summary of the Invention

Automobiles conventionally include a number of components that receive rotary input power from the engine. Such components include alternators, power steering pumps, air conditioning compressors and hydraulic fluid pumps. The rotary input shafts of these components are conventionally interconnected with each other and with the engine output shaft by an arrangement of belts and pulleys. The typical power component provides output power as a direct function of input speed of rotation. However, the engine speed can vary over a wide range under normal operating conditions, from approximately 500 rpm at engine idle to 3,000-5,000 rpm at normal cruising speed. Consequently, the power components driven by the engine must be designed to provide minimum needed output at minimum input speed, resulting in excessive and wasted output at normal cruising speed of the engine. It is therefore necessary to over-design the power components.

In accordance with one aspect of the present invention, the foregoing and other problems are addressed and overcome by connecting the power component or components to a single drive shaft, and coupling this shaft to the engine through a controlled speed governor. In the preferred embodiment, the governor comprises a constant speed governor. In this way, the power component or components are designed to operate at a given input speed, which remains constant independent of fluctuations in engine rpm and angular velocity of the engine output shaft. Power component design is greatly simplified. Power is generated by these components more efficiently, and design considerations such as noise and bearing life can be optimized. In an alternative embodiment, the governor comprises a dual speed clutch, which provides sufficient rotational velocity to the power components at idle and low engine speed, but prevents overspeed of these engine components at higher engine speed.

In accordance with another aspect of the present invention, the engine shaft is coupled to the power components by a variable speed shaft as is conventional, and the power components are controlled as a function of shaft speed. In a presently preferred implementation of this aspect of the invention, the rotor windings of a dual-rotor alternator are controlled as a function of input shaft speed so that all windings are interconnected at idle and low speed for enhanced power transfer, but some windings are disconnected at higher speed to limit power output. Specifically, in the preferred embodiment, alternative rotor windings are selectively disconnected at high speed to limit stator/rotor power transfer, and thereby limit high-speed alternator output.

### Brief Description of the Drawing

The invention, together with additional objects, features and advantages thereof, will be best understood from the following description, the appended claims and the accompanying drawing, in which:
FIG. 1 is a functional block diagram of an engine power system in accordance with a presently preferred embodiment of the invention;
FIG. 2 is a fragmentary schematic diagram of an alternative embodiment of the invention;
FIG. 3 is a fragmentary schematic diagram of another alternative embodiment of the invention, and
FIGS. 4A-4C are fragmentary schematic diagrams of rotor winding arrangements in the embodiment of. FIG. 3.

### Detailed Description of Preferred Embodiments

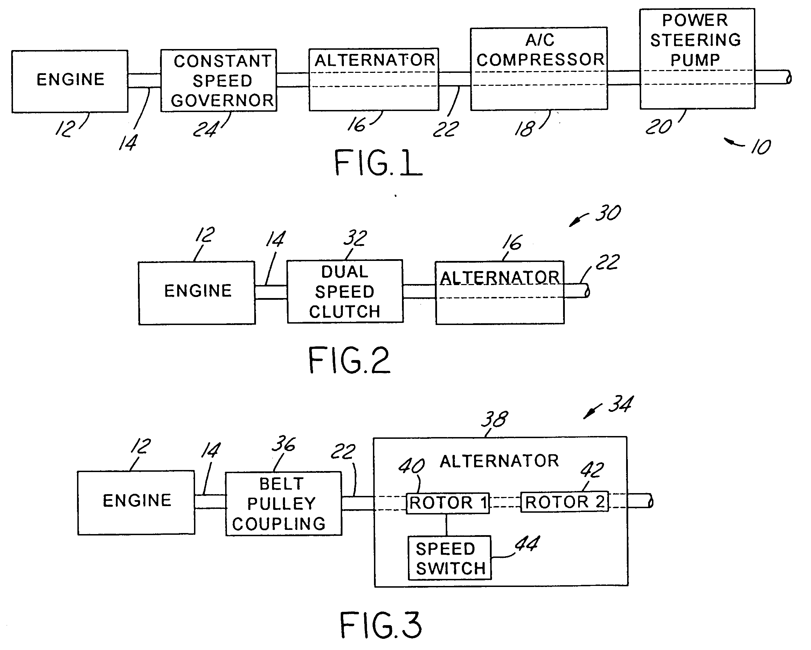

FIG. 1 illustrates an engine power system 10 that includes an internal combustion engine 12 having an output crankshaft 14, the angular velocity of which varies with engine rpm. A plurality of engine power components, such as an alternator 16, an air conditioning compressor 18 and a power steering pump 20, have respective rotary inputs interconnected by a common drive shaft 22. A constant speed governor 24 couples engine output shaft 14 to drive shaft 22. Constant speed governor 24 may be of any suitable type, such as a conventional fly-ball governor, or a fluid governor of the type marketed by Torotrak Corporation, a wholly-owned subsidiary of British Technology Corporation in London, England. Other power components may be connected to shaft 22, alternator 16, air conditioning compressor 18 and power steering pump 20 being exemplary.

During normal operation, the output speed of engine shaft 14 can vary from 500 rpm to an excess of 5,000 rpm. However, provision of constant speed governor 24 allows components 16,18,20 to be designed for optimum operation at a single input speed, such as 3,000 to 4,000 rpm. Design of the components is greatly simplified, and design considerations can be optimized to provide the desired power output at the specified constant input speed.

FIG. 2 illustrates a modified power system 30, in which engine 12 and crankshaft 14 are coupled to drive shaft 22 and alternator 16, etc. by a dual speed clutch 32. Clutch 32 has a first input/output ratio below a preselected input speed threshold for providing necessary power to alternator 16, etc. at engine idle and low speed, and a second input/output ratio at higher speed above the input speed threshold to prevent overspeed of the power components at high engine speed. A speed threshold in the range of 2,500 to 3,500 rpm is suitable. Clutch 32 may be of any conventional type having mechanical, electromechanical or piezoelectric clutch components. Alternatively, clutch 32 may comprise a dual speed clutch responsive to an internal or external control input from speed-sensitive electronic circuitry or the like. The embodiment of FIG. 2 has the advantage of being lower in cost than the embodiment of FIG. 1.

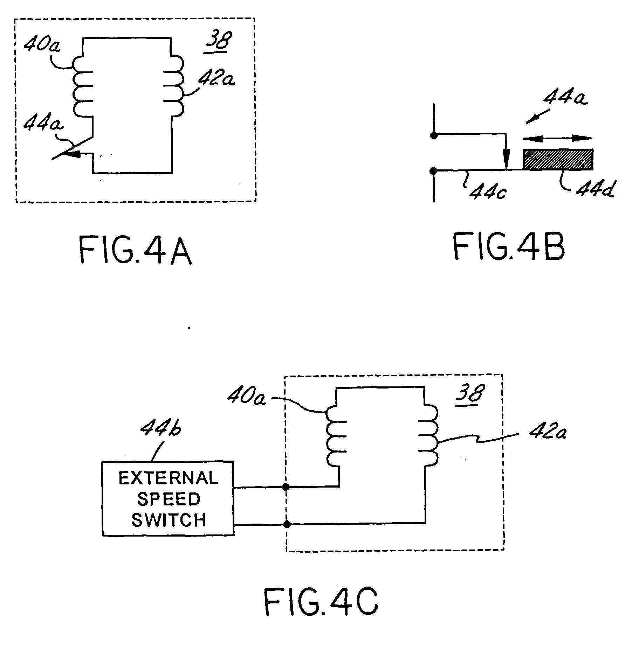

FIG. 3 illustrates a power system 34 in which shaft 14 of engine 12 is coupled to alternator drive shaft 22 by an conventional belt/pulley arrangement 36, so that speed of rotation of shaft 22 varies as a continuous function of engine speed. A dual-rotor alternator 38 has a rotor with a pair of rotor segments 40, 42 coupled for conjoint rotation with shaft 22. Each rotor segment 40, 42 has an associated electrical winding 40a, 42a (FIG. 4A). Winding 40a is connected in parallel with winding 42a through a speed sensitive switch 44, which may be internal to alternator 38 as at 44a (FIGS. 4A and 4B) or external to alternator 38 as at 44b (FIG. 4C). Switch 44a may include a switch element 44c coupled to a moveable weight 44d for adjusting the speed at which switch 44a opens. Thus, at low speed, rotor segments 40a, 42a are connected in parallel for delivering adequate power at idle and low speed. At a higher speed threshold in the range of 2500 to 3500 rpm, for example, switch 44a or 44b opens to disconnect winding 40a of rotor segment 40, and thereby limit power transfer to the alternator output.

## Claims

1. An engine power system (10, 30, 34) that comprises an internal combustion engine (12) having a rotary output shaft (14) which rotates at an angular velocity that varies with engine speed, at least one power component (16, 18, 20, 38) having a rotary input, and means (24, 32, 40-44) for controlling transfer of power from said engine output shaft to said at least one component in a predetermined controlled manner as a function of engine speed.

2. The system (10, 30, 34) set forth in claim 1 wherein said means (24, 32, 40-44) comprises constant speed governor means (24) for maintaining constant speed at said rotary input independent of fluctuations in engine rpm and angular velocity of said engine output shaft.

3. The system (10, 30, 34) set forth in claim 1 wherein said means (24 43, 40-44) comprises a clutch (32) having a first input/output speed ratio below a preselected speed threshold to provide necessary speed at said power components at engine idle, and a second input/output speed ratio above said preselected speed threshold to prevent overspeed to said power components at high engine speed.

4. The system (10, 30, 34) set forth in claim 1 wherein said means (24, 32, 40-44) comprises means (40-44) at said at least one power component for controlling output thereof as a function of engine speed.

5. The system (10, 30, 34) set forth in claim 4 wherein said means (40-44) comprises a speed-sensitive switch (44).

6. The system (10, 30, 34) set forth in claim 5 wherein said at least one power component (16, 18, 20, 38) comprises a dual-rotor alternator (38) having at least two rotor segments (40, 42) with associated rotor windings, and in which said speed-sensitive switch (44) is coupled to one of said segments (40) for selectively disconnecting the windings of said segment (40) at a rotor speed above a selected threshold.

7. The system set forth in claim 6 wherein said switch (44a) is mounted on said alternator.

8. The system set forth in claim 6 wherein said switch (44b) is mounted separately from said alternator.

9. The system set forth in claim 6, 7 or 8 wherein said switch (44) includes means (44d) for adjusting said selected threshold.
